# NEUE EUROPÄISCHE PATENTSCHRIFT

(11) **EP 1 316 455 B2**
(45) Veröffentlichungstag und Bekanntmachung des Hinweises auf die Entscheidung über den Einspruch: **03.11.2010**
(45) Hinweis auf die Patenterteilung: 02.01.2008
(21) Anmeldenummer: 02025842.2
(22) Anmeldetag: 19.11.2002
(51) Int. Cl.: B60J 1/20

(54) **Fensterrollo, insbesondere zur Verwendung in einem Kraftfahrzeug**
Roller blind for window, particularly for motor vehicle use
Store à enrouler, en particulier pour l'utilisation dans un véhicule automobile

(30) Priorität: 30.11.2001 DE 10158662
(43) Veröffentlichungstag der Anmeldung: 04.06.2003
(73) Patentinhaber: ADAM OPEL AG, 65423 Rüsselsheim (DE)
(72) Erfinder: Maertin, Ralph, 55234 Nieder-Wiesen (DE)

(56) Entgegenhaltungen:
- EP-A- 1 238 840
- EP-A2- 0 834 414
- DE-A- 1 959 988
- DE-A- 3 046 421
- DE-A- 10 010 026
- DE-A1- 3 713 028
- DE-A1- 4 327 393
- DE-A1- 4 401 942
- DE-A1- 10 123 801
- DE-A1- 19 605 997
- DE-A1- 19 640 846
- DE-C- 4 320 467
- DE-U- 7 606 941
- DE-U- 9 416 744
- JP-B- 8 310 306
- US-A- 1 736 527
- US-A- 3 075 805
- US-A- 4 442 881
- US-A- 4 848 823
- US-A- 5 176 421
- US-A- 5 423 588
- US-A- 5 868 191

## Beschreibung

Die Erfindung betrifft eine Seitentür eines Kraftfahrzeuges mit Fensterrollo gemaß den Merkmalen des Oberbegriffs des Patentanspruchs 1.

Ein Fensterrollo ist aus der nachveröffentlichten EP-A-1 238 840 bekannt. Dieses Fensterrollo findet Verwendung im Zusammenhang mit einem Glas- oder Kunststoffschiebedach eines Kraftfahrzeuges. Bei diesem Fensterrollo nimmt die Rollobahn im Bereich ihres der Hauptwickelwelle abgewandten Endes einen Zugspriegel auf, mittels dessen die Rollobahn ausziehbar ist. Für den Zugspriegel ist eine Schutzeinrichtung vorgesehen, die im Crashfall einen Aufprall eines Insassen auf den Zugspriegel mildert. Diese Schutzeinrichtung enthält eine Überlastsicherung, die beim Aufprall ein Ausweichen oder Nachgeben des Zugspriegels ermöglicht. Unter diesem Aspekt ist die Überlastsicherung als Sollbiegestelle oder Sollbruchstelle ausgebildet.

Eine Seitentür eines Kraftfahrzeuges mit Fensterrollo der eingangs genannten Art ist aus der DE 196 05 997 C2 bekannt. Dort ist die Aufwickelrolle und das die Rollobahn aufnehmende Gehäuse in einem unterhalb der Fensteröffnung angeordneten Aufnahmeraum untergebracht und die Rollobahn durch einen Auszugsspalt hindurch ausziehbar. Das Gehäuse und die Aufwickelwelle sind jeweils einteilig und relativ starr ausgebildet.

Andere Gestaltungen von Fensterrollos sind beispielsweise aus der DE 43 20 467 C1, DE 100 05 970 A1 und DE 100 10 026 A1 bekannt.

In der Praxis verwendete Fensterrollos bestehen beispielsweise aus einem einteiligen Gehäuse aus Aluminium, das im Strangpressverfahren hergestellt ist, einer einteiligen Aufwickelwelle aus Metall mit einer Rollobahn bzw. einem Beschattungsstoff sowie den beiden seitlichen Wellenlagern. Dieses Fensterrollo wird rückseitig mit der Türverkleidung verschraubt. Die relativ verwindungssteife Einheit im Gürtelleistenbereich der Türverkleidung wirkt sich beim Seitenaufprall negativ aus. Hauptursache dafür war das rückseitig an der Türverkleidung befestigte Fensterrollo mit einem bauartbedingt relativ hohen Widerstandsmoment.

In der DE 43 27 393 A1 ist ein Seitenaufprallschutz in Form eines an der Tür eines Kraftfahrzeuges befestigbaren Profilgliedes beschrieben. Dieser Seitenaufprallschutz wird hinter dem Außenblech der Tür des Kraftfahrzeuges an der Tür befestigt, derart, dass der Aufprallschutz die Tür verstärkt, um ein Einbeulen der Tür in den Innenraum des Fahrzeuges, z. B. bei einem seitlichen Aufprall eines Fremdfahrzeuges, zu mindern oder zu verhindern. Das Profilglied weist auf seiner äußeren Seitenfläche deformierbare Sollbiegestellen auf. Diese gewährleisten bei einem Unfall eine gezielte Verformung des Profilgliedes auf einem gleichbleibenden hohen Kraftniveau über einen größeren Verformungsweg und stellen somit einen optimalen Abbau der Aufprallenergie des Fremdfahrzeugs sicher.

Es ist Aufgabe der vorliegenden Erfindung, eine Seitentür eines Kraftfahrzeuges mit Fensterrollo der eingangs genannten Art so weiterzubilden, dass bei Einwirkung von Kräften quer zur Längsachse des Rollos dessen Verformung gewährleistet ist.

Gelöst wird die Aufgabe durch eine Seitentür eines Kraftfahrzeuges mit Fensterrollo, die gemäß den Merkmalen des Patentanspruchs 1 ausgebildet ist.

Aufgrund der erfindungsgemäßen Ausbildung des Fensterrollos kann dieses somit bei Einwirkung seitlicher Kräfte seitlich nachgeben und ist damit nicht als starre Einheit wirksam. Im Bereich der Sollbiegestelle oder der Sollbruchstelle bzw., sofern das Fensterrollo mit mehreren Sollbiegestellen bzw. Sollbruchstellen versehen ist, im Bereich dieser Stellen biegt sich das Fensterrollo bei Einwirkung erhöhter Kräfte bzw. es bricht dort. Vorzugsweise ist vorgesehen, dass das Gehäuse sich verbiegt, während die innerhalb des Gehäuses angeordnete Aufwickelwelle bricht oder nachgibt. Das Gehäuse ist vorzugsweise mehrteilig ausgebildet. Es besteht aus Gehäuseteilen, die insbesondere verdrehsicher miteinander verbunden sind. Die Aufwickelwelle ist vorzugsweise an einer oder mehreren Stellen geschwächt, so dass geringere Kräfte ausreichen, sie zu verbiegen oder zu brechen.

Da Gehäuse der Fensterrollos vorzugsweise in Strangpresstechnik hergestellt werden, wobei ein bestimmter Querschnitt über die gesamte Länge gezogen wird, sollten mindestens zwei oder mehr Gehäuseteile vorgesehen sein, unter Umständen auch mit axialen Abständen zueinander.

Die Verbindung der Gehäuseteile kann auf unterschiedlichste Art und Weise erfolgen. Beispielsweise durch Einsatz von Außenhülsen, Formschellen, Abstandshaltern, Formstücken aus Kunststoff oder anderen Materialien. Es können hierbei beispielsweise Klemm-, Rast-, Schnapp- oder Bajonettverbindungen verwendet werden.

Die Aufwickelwelle ist vorzugsweise örtlich oder über die gesamte Länge mit notwendigen Schwächungen versehen, beispielsweise durch Verwendung von offenen Profilen, Einkerbungen, Bohrungen, Nuten, Schlitzen, Materialanhäufungen oder Reduzierungen von Material sowie Querschnittsänderungen.

Wegen der nachgiebigen Ausbildung des erfindungsgemäßen Fensterrollos wird das komplette Separieren oder Ablösen der Türverkleidung verhindert.

Weitere Merkmale der Erfindung sind in den Unteransprüchen, der Beschreibung der Figuren sowie den Figuren selbst dargestellt.

In den Figuren ist die Erfindung anhand eines Ausführungsbeispieles dargestellt, ohne hierauf beschränkt zu sein. Es zeigt:
- Fig. 1: eine räumliche Ansicht einer Hintertürverkleidung eines Kraftfahrzeuges, in Richtung der Rückseite der Verkleidung versehen, mit in diese integriertem Fensterrollo,
- Fig. 2: eine räumliche Ansicht der wesentlichen Bauteile des Fensterrollos, veranschaulicht in einer systematischen Anordnung der Einzelteile,
- Fig. 3: eine räumliche Ansicht eines Verbindungsbereiches zweiter Gehäuseteile und eines Verbindungsstückes,
- - Fig. 4: eine vergrößerte Darstellung der in Figur 2 gezeigten Anordnung von Gehäuse und Aufwickelwelle sowie Verbindungsstück, in einer Explosionsdarstellung,
- Fig. 5: in einer räumlichen Darstellung eine vergrößerte Ansicht des Verbindungsstückes und eines in dieses eingesetzten Gehäuseteiles sowie eines Lagers für die Aufwickelwelle und
- Fig. 6: eine Explosionsdarstellung der in Figur 5 gezeigten Bauteile des Fensterrollos.

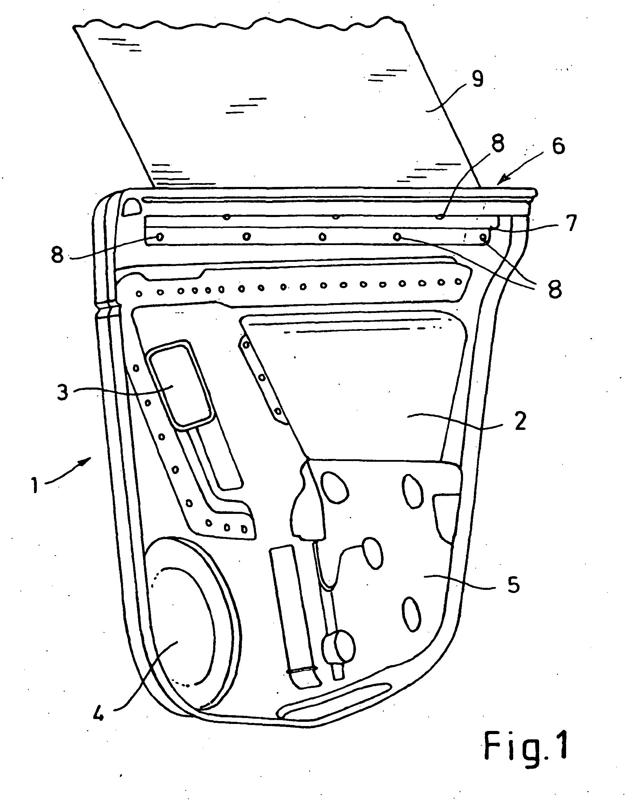

Figur 1 zeigt eine Türverkleidung 1 für eine hintere Tür eines Kraftfahrzeuges, die in bekannter Art und Weise gestaltet ist. Sie ist als Formkörper ausgebildet und weist unter anderem, aus der Blickrichtung des Fahrzeuginsassen gesehen, eine Vertiefung 2 mit integrierter Armlehne, eine Öffnung 3 zur Aufnahme eines Betätigungsschalters für den Fensterheber, eine Ausnehmung 4 für einen Lautsprecher und eine Crasheinlage 5 auf. Im oberen Bereich ist die Türverkleidung mit einem sich im Wesentlichen über deren Länge erstreckenden Schacht 6 versehen, der der Aufnahme des erfindungsgemäßen Fensterrollos 7 dient. Das Gehäuse ist mittels Schrauben 8 mit der Türverkleidung 1 verschraubt. Die Rollobahn des Fensterrollos 7 ist mit der Bezugsziffer 9 bezeichnet und in der Figur 1 teilweise dargestellt.

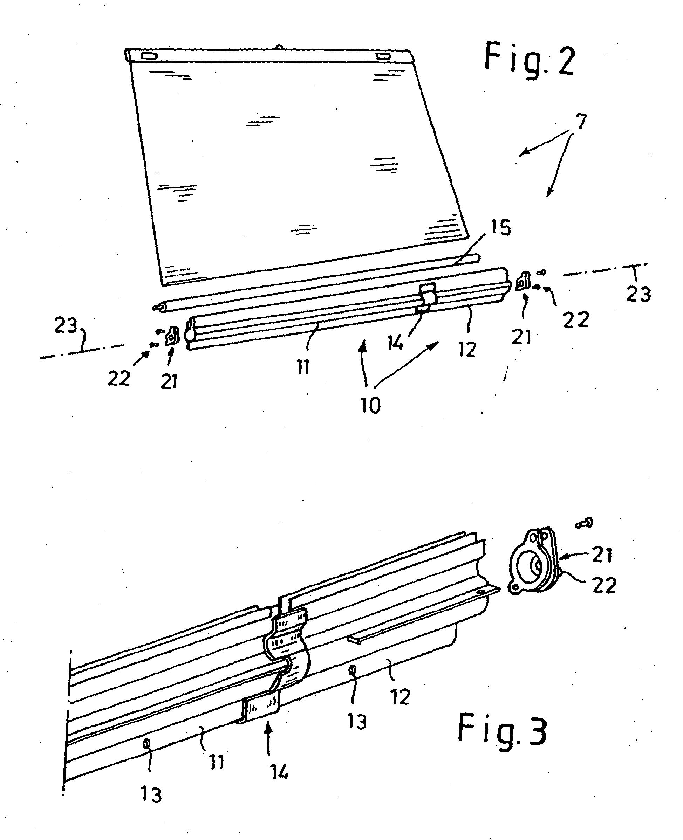

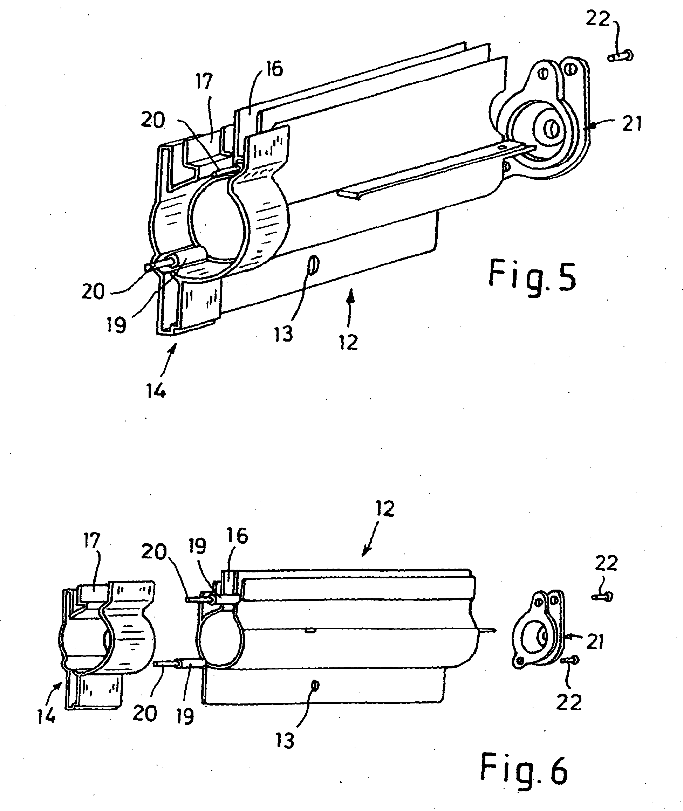

Wegen der Beschreibung des Fensterrollos 7 wird auf die Darstellung der Figuren 2 bis 6 verwiesen:

Beim konkreten Ausführungsbeispiel ist das Gehäuse 10 des Fensterrollos 7 als Strangpressprofil ausgebildet. Das Gehäuse 10 wird durch zwei Gehäuseteile 11 und 12 gebildet, wobei das eine Gehäuseteil 12 eine Länge aufweist, die etwa einem Drittel der Gesamtlänge des Gehäuses 10 entspricht. Die Gehäuseteile 11 und 12 sind mit Bohrungen 13 versehen, die Schrauben 8 zum Befestigen des Fensterrollos an der Türverkleidung 1 durchsetzen. Die zugewandten Enden der Gehäuseteile 11 und 12 sind in ein gleichfalls als Strangprofil oder Kunststoff-Spritzgießformteil, jedoch kurzer Länge, ausgebildetes Verbindungsstück 14 eingesetzt. Das Verbindungsstück 14 ist an einer kritischen Stelle, an welcher die größte Verformung nach einem Aufprall in den Innenraum stattfindet, zugeordnet. Die Gehäuseteile 11 und 12 sowie das Verbindungsstück 14 weisen in ihrem zentralen Bereich 19, bezogen auf die Längsachse des Gehäuses 10 bzw. die Längsachse 23 des Fensterrollos 7 einen im Wesentlichen kreisförmigen Querschnitt auf, derart, dass in diesen die Aufwickelwelle 15 eingeschoben werden kann. Mit der Aufwickelwelle 15 ist die Rollobahn 9 verbunden, die im Bereich von Schlitzen 16 und 17 der Gehäuseteile 11 und 12 bzw. des Verbindungsstückes 14 aus diesen herausführt.

Der Außendurchmesser der Gehäuseteile 11 und 12 ist in deren zylindrischen Bereich so bemessen, dass die Gehäuseteile 11 und 12 mit geringem Spiel in das Verbindungsstück 14 eingesteckt werden können. Das Verbindungsstück 14 ermöglicht dabei Toleranzen bei der Montage des Fensterrollos 7 in der Türverkleidung 1 auszugleichen, indem es quasi als Führungsstück für die Gehäuseteile 11 und 12 dient, die mehr oder weniger beabstandet zueinander positioniert werden können. Zwei Bolzen 18, die jeweils einen relativ dickeren zentralen Bereich 19 und sich an diesen anschließende Raststiftabschnitte 20 aufweisen, dienen der Verbindung der beiden Gehäuseteile 11 und 12. Hierzu werden zunächst die beiden Bolzen 18 mit den Raststiftabschnitten 20 in ein Gehäuseteil, beispielsweise das Gehäuseteil 12 bis zum Anschlag am dickeren zentralen Bereich 19 eingesteckt, dann die beiden Gehäuseteile 11 und 12 in das Verbindungsstück 14 eingesetzt, wobei die beiden Bolzen 18 mit ihren dann noch freien Raststiftabschnitten 20 in das andere Gehäuseteil 11 einrasten. Die aus den beiden Gehäuseteilen 11 und 12 und dem Verbindungsstück 14 gebildete Einheit nimmt die Aufwickelwelle 16 mit der aus dem Gehäuse herausgeführten Rollobahn 9 auf. Lagerdeckel 21, die auf den einander abgewandten Seiten der Gehäuseteile 11 und 12 angeordnet sind, nehmen die Enden der Aufwickelwelle 15 auf, und sind in die Gehäuseteile 11 und 12 eingesteckt sowie, mittels Schrauben 22 mit diesen verschraubt.

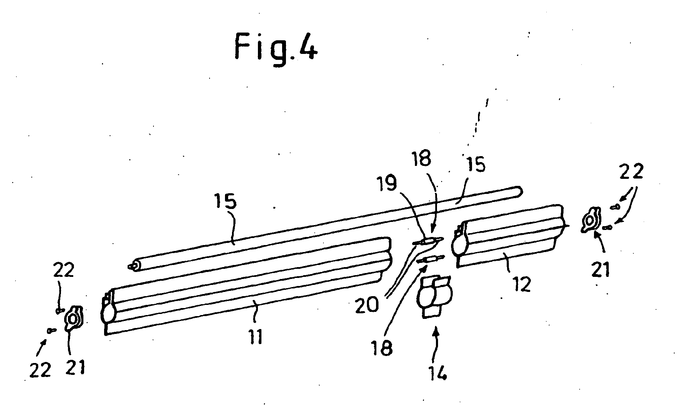

Aus Gründen der zeichnerischen Klarheit ist in den Figuren 2 und 4 die Aufwickelwelle 15 neben dem Gehäuse 10 gezeichnet. Selbstverständlich durchsetzt die Aufwickelwelle 15 das Gehäuse 10.

Die Aufwickelwelle 15 ist in ihrer Länge ungeteilt ausgebildet. Sie weist allerdings eine geringe Biegesteifigkeit auf. Es ist nur sicherzustellen, dass die Aufwickelwelle 15 sich beim Abwickeln der Rollobahn 9 entgegen einer Rückstellkraft nicht verbiegt. Die geringe Biegesteifigkeit stellt sicher, dass sich die Aufwickelwelle 15 bei einem Seitencrash aus der Längsachse biegen und damit verformen kann.

Aufgrund des Aufbaus des Fensterrollos mit der Anordnung der über das Verbindungsstück 14 verbundenen beiden Gehäuseteilen 11 und 12 ist sichergestellt, dass sich die aus diesen Bauteilen gebildete Einheit bei einem Seitencrash verformen kann. Die Verformung erfolgt in einem definierten Bereich, nämlich dem Verbindungsstück 14 das relativ weich ausgebildet ist. Es besteht beispielsweise aus Kunststoff.

### Bezugszeichenliste

- Türverkleidung: 1
- Vertiefung: 2
- Öffnung: 3
- Ausnehmung: 4
- Crasheinlage: 5
- Schacht: 6
- Fensterrollo: 7
- Schrauben: 8
- Rollobahn: 9
- Gehäuse: 10
- Gehäuseteil: 11
- Gehäuseteil: 12
- Bohrungen: 13
- Verbindungsstück: 14
- Aufwickelrolle: 15
- Schlitz: 16
- Schlitz: 17
- Bolzen: 18
- Zentraler Bereich: 19
- Lagerdeckel: 21
- Schrauben: 22
- Längsachse: 23

## Patentansprüche

1. Seitentür eines Kraftfahrzeuges mit einem an dieser angebrechten Fensterrollo (7) für ein Seitenfenster der Seitentür, wobei das Fensterrollo ein Gehäuse (10), eine im Gehäuse (10) gelagerte Aufwickelwelle (15) und eine von der Aufwickelwelle (15) entgegen einer Rückstellkraft abwickelbare Rollobahn (9) aufweist, **dadurch gekennzeichnet, dass** das Fensterrollo (7) mit mindestens einer Sollbiegestelle (14) und/oder mindestens einer Sollbruchstelle zum Biegen bzw. Knicken des Fensterrollos (7) aus dessen Längsachse (23) versehen ist, wobei das Gehäuse (10) mit mindestens einer Sollbiegestelle (14) zum Biegen des Fensterrollos (7) aus dessen Längsachse (23) versehen ist, wobei das Gehäuse (10) quer geteilt ausgebildet ist und die Gehäuseteile (11, 12) mittels eines Verbindungsstückes (14) verbunden sind, dass die Sollbiegestelle (14) bildet, wobei die Gehäuseteile (11, 12) in das Verbindungsstück (14) eingesteckt sind.

2. Seitentür nach Anspruch 1, **dadurch gekennzeichnet, dass** eine Sollbiegestelle (14) bzw. Sollbruchstelle im Bereich zwischen der halben und einer Drittellänge des Fensterrollos (7) angeordnet ist.

3. Seitentür nach Anspruch 1 oder 2, **dadurch gekennzeichnet, dass** das Verbindungsstück (14) als Formstück ausgebildet ist.

4. Seitentür nach einem der Ansprüche 1 bis 3, **dadurch gekennzeichnet, dass** die Gehäuseteile (11, 12) mittels das Verbindungsstück (14) durchsetzender stiftförmiger Elemente (18) miteinander verbindbar sind.

5. Seitentür nach einem der Ansprüche 1 bis 4, **dadurch gekennzeichnet, dass** die Aufwickelwelle (15) mit mindestens einer Sollbiegestelle und/oder mindestens einer Sollbruchstelle zum Biegen bzw. Knicken des Fensterrollos (7) aus dessen Längsachse (23) versehen ist.

6. Seitentür nach einem der Ansprüche 1 bis 5, **dadurch gekennzeichnet, dass** die Aufwickelwelle (15) in der Länge ungeteilt ausgebildet und die Sollbiegestelle (14) und/oder die Sollbruchstelle an der Aufwickelwelle (15) vorgesehen ist.

7. Seitentür nach einem der Ansprüche 1 bis 6, **dadurch gekennzeichnet, dass** das Gehäuse (10) mit der Türverkleidung (1) verbindbar ist, insbesondere mittels Schraub-(8) oder Steckverbindungen.

## Claims

1. A side door of a motor vehicle, comprising a roller blind (7) attached thereto for a side window of the side door, with the roller blind comprising a housing (10), a winding shaft (15) held in the housing (10), and a roller blind material (9) which can be unwound from the winding shaft (15) against a restoring force, **characterized in that** the roller blind (7) is provided with at least one predetermined bending point (14) and/or at least one predetermined breaking point for bending or folding the roller blind (7) out of its longitudinal axis (23), with the housing (10) being provided with at least one predetermined bending point (14) for bending the roller blind (7) out of its longitudinal axis (23), with the housing (10) being arranged to be divided transversally and the housing parts (11, 12) being connected by means of a connection piece (14) forming the predetermined bending point (14), with the housing parts (11, 12) being inserted into the connection piece (14).

2. A side door according to claim 1, **characterized in that** a predetermined bending point (14) or predetermined breaking point is arranged in the region of between half and one-third of the length of the roller blind (7).

3. A side door according to claim 1 or 2, **characterized in that** the connection piece (14) is arranged as a shaped part.

4. A side door according to one of the claims 1 to 3, **characterized in that** the housing parts (11, 12) can be connected with one another by means of pin-like elements (18) penetrating the connection piece (14).

5. A side door according to one of the claims 1 to 4, **characterized in that** the winding shaft (15) is provided with at least one predetermined bending point and/or at least one predetermined breaking point for bending or folding the roller blind (7) out of its longitudinal axis (23).

6. A side door according to one of the claims 1 to 5, **characterized in that** the winding shaft (15) is arranged to be undivided in its length and the predetermined bending point (14) and/or the predetermined breaking point is provided on the winding shaft (15).

7. A side door according to one of the claims 1 to 6, **characterized in that** the housing (10) can be connected with the door trim (1), especially by means of bolted connections (8) or plug connections.

## Revendications

1. Portière latérale d'un véhicule à moteur avec un store de fenêtre (7) monté sur celle-ci pour une fenêtre latérale de la portière latérale, lequel store de fenêtre présente un boîtier (10), un axe d'enroulement (15) supporté dans le boîtier (10) et une bande de store (9) pouvant être déroulée de l'axe d'enroulement (15) contre une force de rappel, **caractérisée en ce que** le store de fenêtre (7) est pourvu d'au moins un point de pliage nominal (14) et/ou d'au moins un point de rupture nominal pour plier ou replier le store de fenêtre (7) à partir de son axe longitudinal (23), le boîtier (10) est pourvu d'au moins un point de pliage nominal (14) pour plier le store de fenêtre (7) à partir de son axe longitudinal (23), le boîtier (10) étant partagé transversalement et les parties de boîtier (11, 12) étant reliées au moyen d'un élément de liaison (14) qui forme le point de pliage nominal (14), les parties de boîtier (11, 12) étant introduites dans l'élément de liaison (14).

2. Portière latérale selon la revendication 1, **caractérisée en ce qu'**un point de pliage nominal (14) ou un point de rupture nominal est disposé dans la zone située entre la moitié et le tiers de la longueur du store de fenêtre (7).

3. Portière latérale selon la revendication 1 ou 2, **caractérisée en ce que** l'élément de liaison (14) est conçu comme une pièce moulée.

4. Portière latérale selon l'une des revendications 1 à 3, **caractérisée en ce que** les parties de boîtier (11, 12) peuvent être reliées entre elles au moyen d'éléments en forme de goupille (18) traversant l'élément de liaison (14).

5. Portière latérale selon l'une des revendications 1 à 4, **caractérisée en ce que** l'axe d'enroulement (15) est pourvu d'au moins un point de pliage nominal et/ou d'au moins un point de rupture nominal pour plier ou replier le store de fenêtre (7) à partir de son axe longitudinal (23).

6. Portière latérale selon l'une des revendications 1 à 5, **caractérisée en ce que** l'axe d'enroulement (15) n'est pas partagé dans la longueur et le point de pliage nominal (14) et/ou le point de rupture nominal est prévu sur l'axe d'enroulement (15).

7. Portière latérale selon l'une des revendications 1 à 6, **caractérisée en ce que** le boîtier (10) peut être assemblé avec l'habillage de la portière (1), en particulier au moyen d'assemblages vissés (8) ou enfichés.
